# FASCICULE DE BREVET EUROPEEN

(11) **EP 2 060 420 B1**
(45) Date de publication et mention de la délivrance du brevet: **13.03.2019**
(21) Numéro de dépôt: 08168521.6
(22) Date de dépôt: 06.11.2008
(51) Int. Cl.: B60H 1/00, F28D 20/00

(54) **Dispositif d'échange de chaleur à stockage de frigories**
Wärmeaustauschvorrichtung mit Kältespeicherung
Heat exchanging device with frigorie storage

(30) Priorité: 15.11.2007 FR 0708022
(43) Date de publication de la demande: 20.05.2009
(73) Titulaire: Valeo Systèmes Thermiques, 78321 Le Mesnil Saint-Denis Cedex (FR)
(72) Inventeur: Bellenfant, Aurelie, 72210 Roeze sur Sarthe (FR); Doucet, Philippe, 72300 Sable sur Sarthe (FR); Bigot, Olivier, 72700 Spay (FR); Lemee, Jimmy, 72380 Saint Jean d'Asse (FR)

(56) Documents cités:
- DE-A1-102004 055 339
- DE-A1-102006 011 327
- DE-A1-102006 028 017

## Description

L'invention a trait à un dispositif d'échange de chaleur de chaleur à stockage de frigories, et plus particulièrement à un échangeur de chaleur du type correspondant au préambule de la revendication 1, comme divulgué dans le document DE 10 2006 028 017 A1.

Les échangeurs de chaleur comprennent classiquement au moins un alignement de tubes, chacun de ces tubes présentant au moins un canal longitudinal pour la circulation d'un fluide caloporteur, qui réalise un échange thermique avec de l'air circulant extérieurement aux tubes.

À chacune des extrémité du tube, chaque canal débouche généralement dans une chambre ménagée dans une boîte collectrice ou un collecteur, et qui met en communication de fluide les différents canaux/tubes.

Des échangeurs de chaleur de ce type sont en particulier utilisés dans les circuits de climatisation des véhicules automobiles, l'air refroidi par le fluide caloporteur étant ensuite soufflé dans l'habitacle du véhicule.

Ces circuits de climatisation fonctionnent grâce à l'énergie mécanique fournie par le moteur thermique du véhicule.

Ainsi, il n'est pas possible d'obtenir de l'air climatisé lorsque ce moteur est arrêté.

Ceci est particulièrement problématique pour les véhicules dits "hybrides", dans lesquels le moteur thermique est, dans des conditions définies, arrêté, et suppléé par un moteur électrique. Autrement dit, la fonction "air climatisé" du véhicule n'est plus disponible, alors même que le véhicule roule.

Ce problème existe de même dans les véhicules dits "stop and start", dans lesquels le moteur thermique est systématiquement arrêté lorsque le véhicule se trouve immobile.

Pour résoudre ce problème, il est connu de pourvoir l'échangeur de chaleur de réservoirs, qui stockent un fluide de stockage de frigories. Ce fluide emmagasine des frigories lorsque le circuit de climatisation fonctionne, et restitue ces frigories à l'air traversant l'échangeur, lorsque le circuit de climatisation est arrêté.

De l'air climatisé peut ainsi être obtenu, même lorsque le moteur thermique est à l'arrêt.

Le document WO 2006/053722 divulgue un échangeur de chaleur de ce type. Les réservoirs du fluide de stockage de frigories prennent la forme d'un canal longitudinal ménagé dans des tubes.

L'échangeur de ce document comprend un alignement d'éléments généralement tubulaires, chacun de ces éléments étant constitué par l'association d'un tube présentant un canal longitudinal pour le stockage du fluide à stockage de frigories et d'un tube présentant une pluralité de canaux pour la circulation du fluide caloporteur. Les canaux pour la circulation du fluide caloporteur débouchent dans une chambre d'une boîte collectrice classique, tandis que les canaux pour le stockage du fluide à stockage de frigories débouchent eux dans une chambre d'un collecteur, réalisé sous la forme d'une pièce rapportée sur une face de l'échangeur, et s'étendant partiellement sous la boîte collectrice.

Cet échangeur de chaleur présente une structure compliquée, en particulier en raison du nombre important d'éléments qui la constitue, ce qui augmente considérablement le coût de fabrication de l'échangeur et les difficultés de montage. En particulier, la structure du collecteur est très complexe, et donc difficile à réaliser.

En outre, cet échangeur est volumineux, ce qui nuit à son intégration dans les véhicules automobiles.

L'invention vise à améliorer la situation.

Pour ce faire, on prévoit un échangeur de chaleur selon la revendication 1.

L'échangeur présente ainsi une structure particulièrement simple. Le nombre de composants de l'échangeur est sensiblement identique au nombre de composant des échangeurs classiques, dépourvus de réservoirs pour fluide à stockage de frigories. Il en résulte un coût de fabrication faible.

L'encombrement de l'échangeur selon l'invention n'est pas plus important que celui des échangeurs classiques, ce qui permet de l'intégrer aisément dans un véhicule automobile, en particulier à la place d'un échangeur de type classique.

La Demanderesse a en outre constaté une amélioration signification des performances de cet échangeur, car la proximité des chambres stockant respectivement le fluide caloporteur et le fluide à stockage de frigories permet à ce dernier d'emmagasiner plus de frigories, lorsque le circuit de climatisation fonctionne.

D'autres caractéristiques et avantages de l'invention apparaîtront à l'examen de la description détaillée ci-après, et des dessins annexés sur lesquels :
- la figure 1 est une vue schématique de face d'un échangeur de chaleur selon l'invention,
- la figure 2 est une vue de côté de l'échangeur de la figure 1,
- la figure 3 est une vue en perspective d'une partie d'un tube de circulation de fluide pour l'échangeur de la figure 1,
- la figure 4 est une vue en coupe suivant la ligne IV-IV du tube de la figure 3,
- la figure 5 est une vue en perspective d'une partie de l'échangeur de la figure 1, coupée suivant le plan V-V,
- la figure 6 est une vue en perspective d'une partie d'une cloison de séparation pour l'échangeur de la figure 5,
- la figure 7 est une vue analogue à la figure 6 d'une variante de réalisation de l'échangeur de la figure 1, et
- la figure 8 est une vue de côté et en perspective de la partie supérieure de l'échangeur de chaleur de la figure 1.

Les dessins annexés pourront non seulement servir à compléter l'invention, mais aussi contribuer à sa définition, le cas échéant.

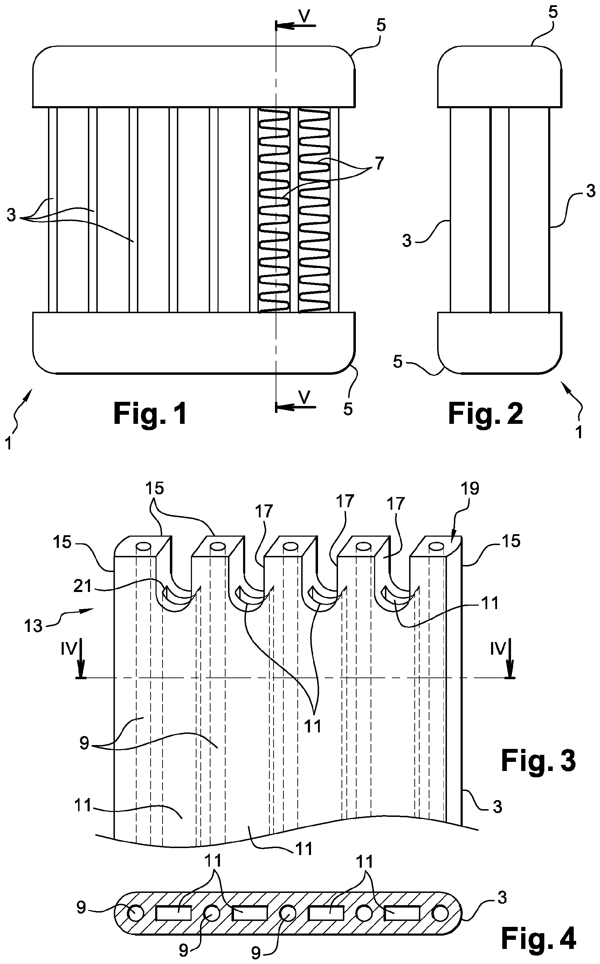

On fait référence aux figures 1 et 2, sur lesquelles est représenté un échangeur de chaleur 1 selon l'invention, à usage, par exemple, dans un circuit de climatisation de véhicule automobile.

L'échangeur 1 comprend une pluralité de tubes de circulation 3 pour un fluide caloporteur. Les tubes 3 sont disposés alignés selon deux rangées de tubes 3. Les tubes 3 forment ainsi un faisceau de tubes 3. Chacune des rangées est parfois désignée "nappe".

Chacune des extrémités de chacun des tubes 3 est reçue dans une boîte collectrice 5 respective. L'échangeur 1 comprend ainsi deux boîtes collectrices 5, qui mettent en communication de fluide les tubes 3 entre eux. Ici, les boîtes collectrices 5 présentent une allure générale parallélépipédique et sont disposées en vis-à-vis l'une de l'autre.

Entre deux tubes 3 adjacents est à chaque fois disposé un intercalaire d'échange de chaleur 7. Ici, les intercalaires 7 présentent une forme ondulée, le sommet de chacune des oscillations étant en contact avec l'un des deux tubes adjacents.

En fonctionnement, l'échangeur 1 assure un échange de chaleur entre le fluide caloporteur, ou premier fluide, en circulation dans les tubes 3, et les boîtes collectrices 5, et un fluide extérieur traversant extérieurement l'échangeur 1. Les intercalaires 7 augmentent la surface d'échange de chaleur et améliorent ainsi les performances de l'échangeur 1.

On fait référence aux figures 3 et 4, qui représentent l'un des tubes 3.

Le tube 3 comporte une pluralité de canaux de circulation 9 ou premiers canaux, pour le fluide caloporteur. Les premiers canaux 9 s'étendent généralement suivant la longueur du tube 3. Les premiers canaux 9 présentent ici une allure rectiligne, mais des allures différentes peuvent être envisagées, par exemple ondulées.

Entre deux premiers canaux 9 est à chaque fois agencé un réservoir de stockage 11, sous la forme d'un canal supplémentaire, ou second canal, pour le stockage d'un second fluide, ici, un fluide à capacité de stockage de frigories. Les réservoirs 11 s'étendent généralement suivant la longueur du tube 3, et présentent ici une allure rectiligne. Des allures différentes peuvent être prévues, par exemple ondulées. De préférence, les premiers canaux 9 et les réservoirs 11 s'étendent de manière complémentaire et de façon aussi proche les uns des autres que possible. Ainsi, les échanges thermiques entre le fluide caloporteur circulant dans les premiers canaux 9 et le fluide de stockage de frigories des réservoirs 11 sont optimisés. Ceci implique, d'une part, un stockage de frigories optimal lorsqu'une circulation du fluide caloporteur est imposée, et, d'autre part, une restitution de ces frigorie également optimale, lorsque cesse la circulation du fluide caloporteur.

Ici, les premiers canaux 9 présentent une section transversale généralement circulaire, tandis que les réservoirs 11 présentent eux une section transversale généralement rectangulaire. La forme circulaire permet aux canaux 9 de présenter une bonne résistance à la pression du fluide caloporteur. La forme rectangulaire permet aux réservoirs 11 d'occuper le maximum d'espace au sein du tube 3, tout en résistant à la pression assez faible du fluide de stockage de frigorie. Il s'agit là de formes actuellement préférée, et rien ne s'oppose à ce que d'autres formes soient employées, par exemple ovales.

Le tube 3 présente au moins une zone d'extrémité 13 crénelée comprenant une pluralité de dents 15 faisant saillie longitudinalement du tube 3, deux dents 15 adjacentes formant à chaque fois un créneau 17 entre elles.

Chaque premier canal 9 débouche au niveau d'une face d'extrémité 19 d'une dent 15, tandis que chaque réservoir 11 débouche au niveau d'une face d'extrémité 21 d'un créneau 17.

La zone du tube 3 où débouche un canal 9 est dite extrémité débouchante du canal et la zone de ce tube 3 où débouche un réservoir est dite extrémité débouchant du réservoir 11.

La zone d'extrémité 13, ou extrémité longitudinale, du tube 3 est ainsi agencée de manière que les extrémités débouchantes des premiers canaux 9 et les extrémités débouchantes des réservoirs 11 soient décalées les unes par rapport aux autres, dans la direction longitudinale du tube 3. Ici, les extrémités débouchantes des réservoirs 11 sont en retrait par rapport aux extrémités débouchantes des premiers canaux 9.

Dans le mode de réalisation des figures 3 et 4, chacune des dents 15 reçoit à chaque fois une extrémité débouchante d'un unique premier canal 9, et chacun des créneaux 17 reçoit à chaque fois une extrémité débouchante d'un unique réservoir ou second canal 11.

Dans d'autres réalisations, non représentées, chacune des dents 15 et/ou des créneaux 17 pourrait recevoir les extrémités débouchantes de plusieurs canaux 9 ou réservoir 11.

Le tube 3 se présente ici sous la forme d'une pièce monobloc, laquelle peut être réalisée par extrusion.

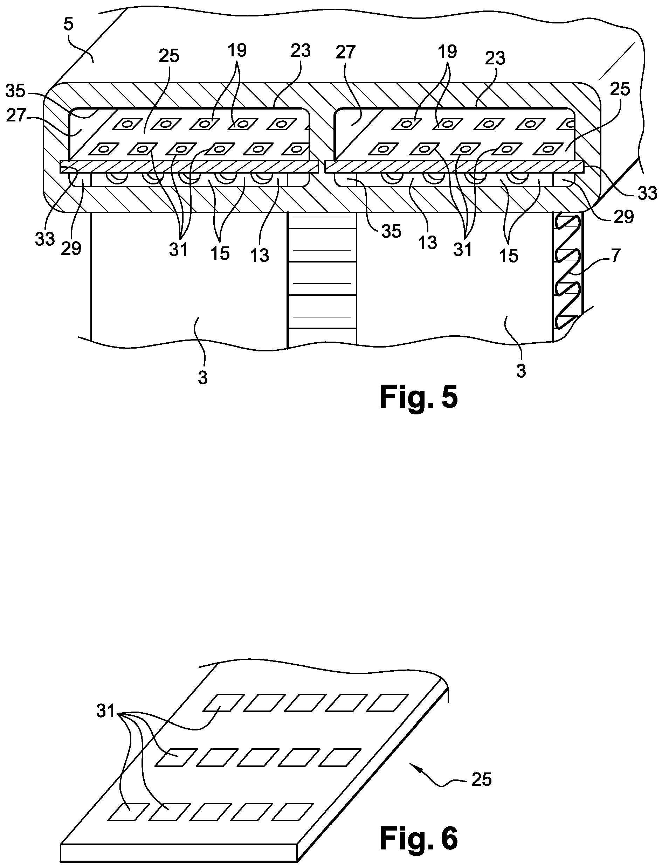

On fait référence à la figure 5, qui représente en détail une boîte collectrice 5 de l'échangeur 1.

Dans la boîte collectrice 5 sont ménagées deux chambres collectrices principales 23 ou chambres principales 23 dans lesquelles débouchent les zones d'extrémité 13 de chacun des tubes 3 de chaque nappe du faisceau de tubes 3, respectivement.

Une cloison de séparation 25, ou élément de cloison, est disposée dans chacune des chambres principales 23 de manière à délimiter dans ces chambres principales 23, à chaque fois, une première partie de chambre, ou chambre supérieure 27, et une seconde partie de chambre, ou chambre inférieure 29. Les qualificatifs "inférieur" et "supérieur" sont à considérer ici par rapport à une hauteur définie suivant la longueur des tubes 3, et ne limitent aucunement l'invention à une orientation particulière de l'échangeur 1, en particulier dans un véhicule automobile. Dans ce mode de réalisation, les chambres supérieures 27 sont plus éloignées de l'extrémité des tubes 3 que les chambres inférieures 29.

À chaque fois, une cloison 25 est agencée de manière à séparer chacune des extrémités des canaux 9 débouchant dans une chambre principale 23 des extrémités des réservoirs 11 débouchant dans cette même chambre principale 23. Autrement dit, chacune des cloisons 25 est agencée de manière que les canaux 9 débouchent dans une chambre supérieure 27 et que les réservoirs débouchent dans une chambre inférieure 29.

La cloison 25 (représentée seule sur la figure 6) est munie d'une pluralité de passages 31 conformés de manière correspondante à la section transversale des dents 15. La cloison 25 est ainsi agencée de manière à loger au moins une partie extrême des dents 15 en sorte que les extrémités des canaux 9 disposées au niveau des faces extérieures 19 débouchent finalement dans une chambre supérieure 27.

Autrement dit, la cloison 25 présente des passages 31 entre la chambre supérieure 27 et la chambre inférieure 29, les passages 31 étant conformés de manière à accueillir, au moins en partie, les extrémités débouchantes des canaux 9.

Dans un mode de réalisation différent, ces passages 31 pourraient être conformés de manière à accueillir, en partie au moins, les extrémités débouchantes des réservoirs 11.

La chambre inférieure 29 peut être conformée de manière à accueillir, au moins en partie, les extrémités longitudinales des tubes 3.

En variante, la chambre supérieure 27 peut, en remplacement, ou en complément, être conformée de manière à accueillir, au moins en partie, les extrémités longitudinales de ces tubes.

En outre, la cloison 25 est agencée de manière à ne pas obturer les extrémités des réservoirs 11 disposées au niveau des faces extérieures 21 des créneaux 17, en sorte que ces extrémités débouchent dans une chambre inférieure 29.

La chambre supérieure ou première partie de chambre 27 reçoit le fluide caloporteur, tandis que la chambre inférieure ou seconde partie de chambre 29 reçoit le fluide de stockage de frigories.

Entre l'extrémité débouchante de chaque premier canal 9 et l'extrémité débouchante de chaque réservoir 11 est donc disposé à chaque fois une partie de la cloison 25.

La cloison 25 se présente, ici, sous la forme d'une plaque de forme correspondant à la section transverse par rapport à la hauteur de la chambre principale 23 dans laquelle la cloison est logée. Ici, les chambres collectrices principales 23 présentent une allure généralement parallélépipédique et la cloison 25 présente une allure généralement rectangulaire.

Les passages 31 sont ici réalisés sous la forme d'orifices traversant la plaque formant la cloison 25. Cette plaque est ici agencée à une hauteur de la chambre principale 29 telle que la face extérieure 19 des dents 15 affleure au niveau d'une face supérieure de cette plaque. La cloison pourrait également être disposée de manière que les faces extérieurs 19 fassent saillie de la face supérieure de la plaque, ou encore soient disposées en retrait par rapport à cette face tout en étant logée dans les passages 31.

L'épaisseur de la plaque formant la cloison 25 est telle que cette plaque n'obture pas les extrémités débouchantes des réservoirs 11. Autrement dit, la cloison 25 est disposée de manière à ménager un espace entre l'extrémité débouchante des réservoirs 11 et la cloison 25.

La cloison 25 est maintenue dans la chambre principale 23 par une rainure 33 ménagée dans la paroi intérieure 35 de la chambre collectrice principale 23.

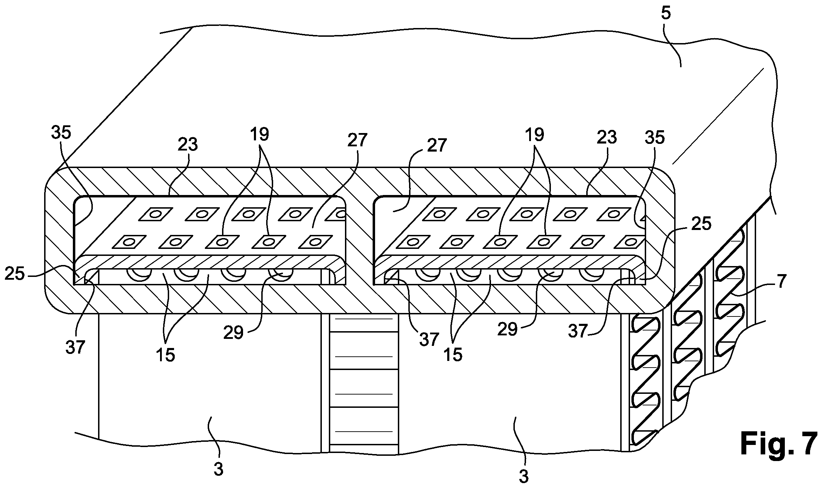

La figure 7 représente une variante de réalisation dans laquelle cette plaque présente des bords recourbés pour former des supports 37 s'appuyant sur la paroi intérieure 35 de la chambre collectrice.

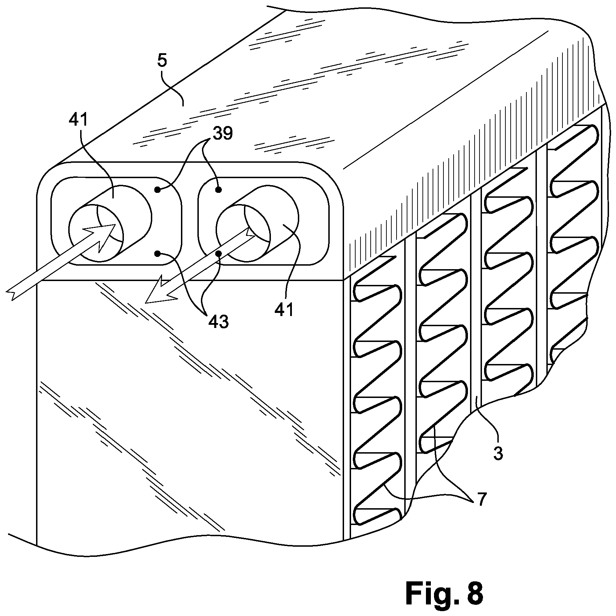

La figure 8 montre que chacune des chambres principales 23 peut être obturée au moyen d'un bouchon 39 respectif, disposé à une extrémité de la boîte collectrice 5, et fermant à la fois les chambres supérieure 27 et inférieure 29. Chaque bouchon 39 est muni d'une tubulure de raccordement 41 en communication fluidique avec une chambre supérieure 27 pour raccorder l'échangeur 1 à un circuit de circulation de fluide caloporteur. Chaque bouchon 39 présente en outre un orifice de remplissage 43, en communication fluidique avec une chambre inférieure 29, pour remplir les réservoirs 11 de fluide de stockage de frigories.

En variante (non représentée), l'un au moins des bouchons 39 pourrait être remplacé par deux bouchons, chacun de ces bouchons venant fermer uniquement l'une des chambres supérieure 27 et inférieure 29.

Selon un autre mode de réalisation, seul l'un des bouchons 39 est muni d'un orifice de remplissage du fluide de stockage de frigories, les chambres inférieures 29 d'une même boîte collectrice 5 étant reliées en communication de fluide, par exemple par un ou plusieurs passages de jonction, non représentés, ménagés dans une partie de la boîte collectrice 5 délimitant les chambres principales 23.

L'invention n'est pas limitée aux modes de réalisation décrits ci-avant, à titre d'exemple uniquement.

Par exemple un grand nombre de modifications peuvent être apportées aux modes de réalisation décrits sans pour autant sortir du cadre de l'invention. Ainsi, par exemple :
- L'échangeur 1 peut présenter une unique nappe de tubes 3, chacune des boîtes collectrices 5 comportant alors une unique chambre principale 23.
- Seuls quelqu'uns des tubes 3 peuvent être dotés de réservoirs 11, par exemple seuls les tubes 3 de l'une des nappes, ou encore un tube 3 sur deux tubes 3, ou plus.
- Dans le cas où tous les tubes 3 d'une nappe sont dépourvus de réservoir 11, la chambre principale 23 accueillant les extrémités des tubes de la nappe peut être prévue sans cloison 25.
- Les tubes 3 peuvent être agencés de manière que les réservoirs 11 débouchent au niveau des dents 15, tandis que les canaux 9 débouchent au fond des créneaux 17. Les chambres supérieures 27 servent alors à collecter le fluide de stockage de frigories, tandis que les chambres inférieures 29 servent à la collecte du fluide caloporteur.
- Les tubes 3 peuvent être agencés de manière que l'une des extrémités des réservoirs 11 soit obturée, la chambre principale 23 correspondante n'ayant alors plus besoin d'être divisée.
- Outre la cloison 25, des cloisons supplémentaires peuvent être prévues dans une chambre principale 23 pour subdiviser les chambres supérieure 27 et inférieure 29, ou encore pour subdiviser cette chambre principale 23 en chambres secondaires, chaque chambre secondaire étant alors munie d'une cloison 25 pour former les chambres supérieure 27 et inférieure 29.
- Sur les dessins, les dents 15 présentent une section transversale carrée, mais des sections de forme différente peuvent être prévues. En particulier, certaines des dents 15 peuvent présenter une section transversale de forme différente des autres dents 15.
- Les tubes 3 peuvent s'étendre de manière à former un U. Les boîtes collectrices 5 peuvent alors être disposées l'une à côté de l'autre. En variante, une unique boîte collectrice 5 peut être prévue, agencée de manière à recevoir chacune des extrémités de chaque tube 3.
- La cloison 25 peut être prévue d'un seul tenant avec la boîte collectrice 5, ou encore être constituées de plusieurs éléments de cloison.

## Revendications

1. Échangeur de chaleur (1) du type comprenant au moins un alignement de tubes (3) et au moins une première chambre collectrice (23), dans laquelle est reçue une extrémité longitudinale (13) des tubes (3), chacun de ces tubes présentant au moins un premier canal (9) pour la circulation d'un premier fluide, et l'un au moins de ces tubes (3) présentant, en outre, au moins un second canal (11) pour le stockage d'un second fluide, la première chambre collectrice (23) comportant au moins une cloison (25), agencée entre une extrémité dite débouchante des premiers canaux (9) et une extrémité dite débouchante du second canal (11), et coopérant avec une paroi intérieure (35) de la chambre collectrice (23) de manière à délimiter une première (27) partie de chambre, dans laquelle débouchent les premiers canaux (9), et une seconde (29) partie de chambre, dans laquelle débouche ledit second canal (11), dans lequel chaque tube (3) comportant des premiers (9) et au moins un second (11) canal est agencé de manière que l'extrémité débouchante de chaque second canal (11) soit décalée dans la longueur de ce tube (3) par rapport à l'extrémité débouchante de chacun des premiers canaux (9) dudit tube (3), dans lequel ladite cloison (25) présente des passages (31) entre la première partie de chambre (27) et la seconde partie de chambre (29), lesdits passages étant conformés de manière à pouvoir accueillir au moins en partie les extrémités débouchantes des premiers canaux longitudinaux (9), l'échangeur de chaleur étant **caractérisé en ce qu'**entre deux premiers canaux (9) est à chaque fois agencé un second canal (11).

2. Échangeur selon selon la revendication présédente, dans lequel la première partie de chambre (27) ou la seconde partie de chambre (29) est conformée de manière à pouvoir accueillir, au moins en partie, ladite extrémité longitudinale des tubes (3).

3. Échangeur selon l'une des revendications précédentes, dans lequel l'un au moins des tubes (3) comprend une pluralité de premiers canaux (9) et au moins un second canal (11), chaque second canal (11) étant intercalé dans la pluralité de premiers canaux longitudinaux (9).

4. Échangeur selon la revendication 3, dans lequel chaque second canal (11) dudit tube (3) est interposé entre deux premiers canaux (11).

5. Échangeur selon l'une des revendications 3 et 4, dans lequel l'extrémité longitudinale dudit tube (3) est conformée de manière à présenter au moins un créneau (17) dit longitudinal, chaque créneau (17) longitudinal correspondant à l'extrémité débouchante d'un premier canal (9) ou d'un second canal (11).

6. Échangeur selon l'une des revendications précédentes, dans lequel la paroi intérieure (35) de la première chambre collectrice (23) présente un évidement (33) conformé de manière à recevoir en partie l'élément de cloison (25).

7. Échangeur selon l'une des revendications précédentes, dans lequel ladite cloison (25) est muni d'organes de support (37) venant en appui contre la paroi intérieure (35) de la première chambre collectrice (23).

8. Échangeur selon l'une des revendications précédentes, dans lequel la première chambre collectrice (23) comporte un organe d'obturation (39) muni d'un orifice (43) débouchant dans la seconde chambre (29).

9. 10. Échangeur selon l'une des revendications précédentes, dans lequel les premiers canaux (9) présentent une section transversale rectangulaire, tandis que les seconds canaux (11) présentent une section transversale circulaire.

10. 11. Échangeur selon l'une des revendications précédentes, dans lequel est prévue une seconde chambre collectrice (23), dans laquelle est reçue une extrémité longitudinale (13) de seconds tubes (3), l'un au moins des seconds tubes (3) présentant au moins un premier canal (9) pour la circulation d'un fluide, lesdites première (23) et seconde (23) chambres collectrices étant reliées entre elles par un orifice de passage de fluide.

## Patentansprüche

1. Wärmetauscher (1) von der Art, die mindestens eine Aneinanderreihung von Rohren (3) und mindestens eine erste Sammelkammer (23) enthält, in der ein Längsende (13) der Rohre (3) aufgenommen wird, wobei jedes dieser Rohre mindestens einen ersten Kanal (9) für die Zirkulation eines ersten Fluids aufweist, und mindestens eines dieser Rohre (3) außerdem mindestens einen zweiten Kanal (11) zum Speichern eines zweiten Fluids aufweist,
wobei die erste Sammelkammer (23) mindestens eine Trennwand (25) aufweist, die zwischen einem so genannten Mündungsende der ersten Kanäle (9) und einem so genannten Mündungsende des zweiten Kanals (11) angeordnet ist und mit einer Innenwand (35) der Sammelkammer (23) zusammenwirkt, um einen ersten (27) Kammerbereich, in den die ersten Kanäle (9) münden, und einen zweiten (29) Kammerbereich zu begrenzen, in den der zweite Kanal (11) mündet, wobei jedes Rohr (3), das erste Kanäle (9) und mindestens einen zweiten Kanal (11) aufweist, so angeordnet ist, dass das Mündungsende jedes zweiten Kanals (11) in der Länge dieses Rohrs (3) bezüglich des Mündungsendes jedes der ersten Kanäle (9) des Rohrs (3) versetzt ist, wobei die Trennwand (25) Durchlässe (31) zwischen dem ersten Kammerbereich (27) und dem zweiten Kammerbereich (29) aufweist, wobei die Durchlässe so gestaltet sind, dass sie die Mündungsenden der ersten Längskanäle (9) zumindest teilweise aufnehmen können, wobei der Wärmetauscher **dadurch gekennzeichnet ist, dass** zwischen zwei ersten Kanälen (9) jedes Mal ein zweiter Kanal (11) angeordnet ist.

2. Tauscher nach dem vorhergehenden Anspruch, wobei der erste Kammerbereich (27) oder der zweite Kammerbereich (29) so gestaltet ist, dass er zumindest zum Teil das Längsende der Rohre (3) aufnehmen kann.

3. Tauscher nach einem der vorhergehenden Ansprüche, wobei mindestens eines der Rohre (3) eine Vielzahl erster Kanäle (9) und mindestens einen zweiten Kanal (11) enthält, wobei jeder zweite Kanal (11) in die Vielzahl erster Längskanäle (9) zwischengefügt ist.

4. Tauscher nach Anspruch 3, wobei jeder zweite Kanal (11) des Rohrs (3) zwischen zwei erste Kanäle (11) zwischengefügt ist.

5. Tauscher nach einem der Ansprüche 3 und 4, wobei das Längsende des Rohrs (3) so gestaltet ist, dass es mindestens eine so genanntes Längsspitze (17) aufweist, wobei jede Längsspitze (17) dem Mündungsende eines ersten Kanals (9) oder eines zweiten Kanals (11) entspricht.

6. Tauscher nach einem der vorhergehenden Ansprüche, wobei die Innenwand (35) der ersten Sammelkammer (23) eine Aussparung (33) aufweist, die so gestaltet ist, dass sie das Trennwandelement (25) teilweise aufnimmt.

7. Tauscher nach einem der vorhergehenden Ansprüche, wobei die Trennwand (25) mit Tragorganen (37) versehen ist, die gegen die Innenwand (35) der ersten Sammelkammer (23) in Anlage kommen.

8. Tauscher nach einem der vorhergehenden Ansprüche, wobei die erste Sammelkammer (23) ein Verschlussorgan (39) aufweist, das mit einer in die zweite Kammer (29) mündenden Öffnung (43) versehen ist.

9. Tauscher nach einem der vorhergehenden Ansprüche, wobei die ersten Kanäle (9) einen rechtwinkligen Querschnitt aufweisen, während die zweiten Kanäle (11) einen kreisförmigen Querschnitt aufweisen.

10. Tauscher nach einem der vorhergehenden Ansprüche, wobei eine zweite Sammelkammer (23) vorgesehen ist, in der ein Längsende (13) zweiter Rohre (3) aufgenommen wird, wobei mindestens eines der zweiten Rohre (3) mindestens einen ersten Kanal (9) für die Zirkulation eines Fluids aufweist, wobei die erste (23) und zweite (23) Sammelkammer durch eine Fluiddurchlassöffnung miteinander verbunden sind.

## Claims

1. Heat exchanger (1) of the type comprising at least one row of tubes (3) and at least a first collection chamber (23), in which a longitudinal end (13) of the tubes (3) is received, each of these tubes having at least a first channel (9) for the circulation of a first fluid, and at least one of these tubes (3) further having at least a second channel (11) for storing a second fluid,
the first collection chamber (23) comprising at least one partition wall (25) which is arranged between an end which is referred to as the opening end of the first channels (9) and an end which is referred to as the opening end of the second channel (11), and cooperating with an inner wall (35) of the collection chamber (23) in order to delimit a first chamber portion (27), in which the first channels (9) open, and a second chamber portion (29), in which the second channel (11) opens, wherein each tube (3) comprising first channels (9) and at least one second channel (11) is arranged so that the opening end of each second channel (11) is offset in terms of the length of this tube (3) relative to the opening end of each of the first channels (9) of the tube (3), wherein the partition wall (25) has passages (31) between the first chamber portion (27) and the second chamber portion (29), the passages being shaped so as to be able to receive at least partially the opening ends of the first longitudinal channels (9), the heat exchanger being **characterised in that** a second channel (11) is arranged in each case between two first channels (9) .

2. Exchanger according to the preceding claim,
wherein the first chamber portion (27) or the second chamber portion (29) is shaped so as to be able to receive at least partially the longitudinal end of the tubes (3).

3. Exchanger according to any one of the preceding claims,
wherein at least one of the tubes (3) comprises a plurality of first channels (9) and at least a second channel (11), each second channel (11) being interposed in the plurality of first longitudinal channels (9).

4. Exchanger according to claim 3,
wherein each second channel (11) of the tube (3) is interposed between two first channels (11).

5. Exchanger according to either claim 3 or claim 4, wherein the longitudinal end of the tube (3) is shaped so as to have at least one slot (17) called a longitudinal slot, each longitudinal slot (17) corresponding to the opening end of a first channel (9) or a second channel (11) .

6. Exchanger according to any one of the preceding claims,
wherein the inner wall (35) of the first collection chamber (23) has a recess (33) shaped so as to partially receive the partition wall element (25).

7. Exchanger according to any one of the preceding claims,
wherein the partition wall (25) is provided with support members (37) which are in abutment against the inner wall (35) of the first collection chamber (23).

8. Exchanger according to any one of the preceding claims,
wherein the first collection chamber (23) comprises a closure member (39) which is provided with a hole (43) which opens in the second chamber (29).

9. Exchanger according to any one of the preceding claims,
wherein the first channels (9) have a rectangular cross-section, whilst the second channels (11) have a circular cross-section.

10. Exchanger according to any one of the preceding claims,
wherein there is provided a second collection chamber (23) in which a longitudinal end (13) of second tubes (3) is received, at least one of the second tubes (3) having at least a first channel (9) for the circulation of a fluid, the first collection chambers (23) and second collection chambers (23) being connected to each other by means of a hole for the passage of fluid.
